Europäisches Patentamt

European Patent Office

Office européen des brevets

(11) Publication number: **0 096 035**
**B1**

(12) **EUROPEAN PATENT SPECIFICATION**

(45) Date of publication of patent specification: **16.04.86**

(51) Int. Cl.⁴: **C 10 L 1/02**

(21) Application number: **82902074.2**

(22) Date of filing: **09.07.82**

(86) International application number:
**PCT/GB82/00203**

(87) International publication number:
**WO 83/00344 03.02.83 Gazette 83/04**

(54) **FUEL FOR AN INTERNAL COMBUSTION ENGINE.**

(30) Priority: **15.07.81 GB 8121825**

(43) Date of publication of application:
**21.12.83 Bulletin 83/51**

(45) Publication of the grant of the patent:
**16.04.86 Bulletin 86/16**

(84) Designated Contracting States:
**DE FR GB SE**

(56) References cited:
**DE-A-2 436 364**
**FR-A-1 594 227**
**GB-A- 136 452**

(73) Proprietor: **PERKINS ENGINES GROUP LIMITED**
**33 Davies Street**
**London WIY 2EA (GB)**

(72) Inventor: **MONCRIEFF, Ian Duncan**
**Welland Cottage, High Street**
**Collyweston Northamptonshire (GB)**

(74) Representative: **Jones, David Bryn**
**Massey-Ferguson Stareton near Kenilworth**
**Warwickshire CV8 2LJ (GB)**

Courier Press, Leamington Spa, England.

## Description

Field of Invention

The invention relates to fuel for an internal combustion engine. It has been widely proposed to use the alcohols, ethanol and methanol, as alternative fuels for internal combustion engines. In particular, it has been proposed to use alcohol with diesel fuel in compression ignition engines so as to counter the shortage and cost of diesel. However, because diesel and alcohol are immiscible to any practical extent the diesel and alcohol have been combined as an emulsion or the alcohol has been added by aspiration in a carburation system or the diesel and alcohol have been injected separately into the combustion chamber. Each of these techniques for combining the diesel and alcohol adds to the complexity and cost of the engine.

Ideally the diesel and alcohol should form a stable blend or solution that could be used in an engine in a conventional manner in place of diesel. British Patent No. 136,452 suggests that a fatty acid produced by saponification of linseed oil or rape oil may be used to blend a petroleum hydrocarbon and alcohol. German OLS 2436364 also discloses a hydrocarbon fuel additive which includes fatty acid as one of the constituents.

It has also been proposed to use alcohols with mineral or fatty oils, such as vegetable oil, in order to produce a fuel in which each component compensates to some extent for the deficiencies of the others. For example, the alcohol compensates for the high viscosity of vegetable oil while the vegetable oil compensates for the poor autoignition and lubricating of the alcohol. However, alcohols and oils are immiscible like diesel and alcohol.

An object of the present invention is to provide a fuel comprising a stable blend of a mineral or fatty oil and alcohol.

Disclosure of the Invention

This object is achieved accordingly to the present invention by using Tall oil as a blend stabilising agent.

Tall oil is a by-product of the Kraft (sulphate) pulping process for the production of cellulose for paper manufacture from pine weed. Crude Tall oil contains approximately 33% rosin acids and 33% fatty acids and is refined to yield a variety of products classified by the proportional split of these acids. Typical fatty acids are oleic acid a (9-Octadecenoic acid $C_{18}H_{34}O_2$) and linoleic acid (9,12-Octadecodienoic acid $C_{18}H_{32}O_2$), both of which are straight chain carboxylic acids. Typical rosin acids are abietic acid and pimaric acid both of which are cyclic hydrocarbons with the formula $C_{20}H_{30}O_2$ and contain the functional carboxyl group.

It is believed that the fuel blend stabilising properties of the Tall oil acid mix is principally due to the presence of the carboxyl group, which is common to all of the above constituents, having an affinity for the alcohol molecule by way of hydrogen bonding and being soluble in diesel because of its hydrocarbon structure.

Best Mode of carrying out the Invention

The following test results illustrate the effectiveness of Tall oil in stabilising a blend of diesel and alcohol or a fatty oil and alcohol. The Tall oil used in each case was Vantal D.30 supplied by BOC Chemicals.

1. A blend of 50 millilitres of diesel and 50 millilitres of ethanol containing 10% by volume of water was made into a stable blend by the addition of 23 millilitres of Tall oil (18.7% by volume).

2. A blend of 50 millilitres of diesel and 50 millilitres of ethanol containing 1% by volume of water was made into a stable blend by the addition of 7 millilitres of Tall oil (6.5% by volume).

Similar results were obtained using methanol in place of ethanol.

It will be seen from these results that an increase in the water content of the mixture requires an increase in the amount of Tall oil needed to produce a stable blend. Typically, fuel ethanol has approximately a 5% water content.

3. In practice, a fuel blend of diesel and alcohol might include less alcohol than diesel. An example of such a fuel blend is 60 millilitres of diesel and 40 millilitres of ethanol containing 5% by volume of water. An addition of 25 millilitres of Tall oil (20% by volume) was used to stabilise this blend.

4. An example of a fatty oil/alcohol fuel blend consists of 50 millilitres of sunflower oil and 50 millilitres ethanol containing 5% by volume of water. This blend was stabilised by the addition of 18 millilitres of Tall oil (15.3% by volume).

It is noted that Tall oil has a relatively low molecular weight and is not present in the fuel blend in such amounts as to cause a coking problem.

Also, the combustion properties of Tall oil are such that it has a fuel value in itself and can be tolerated in relatively large quantities, if necessary.

The above examples illustrate that amounts of Tall oil in excess of 15% by volume may be used as a blend stabilising agent for oil/alcohol fuels.

Further Tall oil offers particular commercial advantages as a blending agent because it is readily available as a by-product in many territories that have access to alcohols. In fact, both Tall oil and alcohol can come from the same biomass source.

## Claims

1. A fuel for an internal combustion engine comprising a blend of oil and alcohol and including Tall oil as a blend stabilising agent.

2. A fuel as claimed in claim 1 in which said oil is a fatty oil.

3. A fuel as claimed in claim 1 in which said oil comprises diesel.

4. A fuel as claimed in any one of the preceding claims in which said alcohol comprises ethanol or methanol.

5. A fuel as claimed in any one of the preceding claims in which excess of 15% by volume of Tall oil is included as a blend stabilising agent.

**Revendications**

1. Combustible pour moteur à combustion interne, comprenant un mélange d'huile et d'alcool et comportant du tallol en tant qu'agent de stabilisation du mélange.

2. Combustible suivant la revendication 1, dans lequel ladite huile est une huile grasse.

3. Combustible suivant la revendication 1, dans lequel ladite huile est du gazole.

4. Combustible suivant l'une quelconque des revendications précédentes dans lequel ledit alcool est l'éthanol ou le méthanol.

5. Combustible suivant l'une quelconque des revendications précédentes dans lequel une quantité supérieure à 15 % en volume de tallol est incorporée comme agent de stabilisation du mélange.

**Patentansprüche**

1. Kraftstoff für einen Verbrennungsmotor, gekennzeichnet durch eine Mischung aus Öl und Alkohol, sowie Tallöl als Mischungsstabilisator.

2. Kraftstoff nach Anspruch 1, dadurch gekennzeichnet, dass das Öl ein Fettöl ist.

3. Kraftstoff nach Anspruch 1, dadurch gekennzeichnet, dass das Öl aus Dieselöl besteht.

4. Kraftstoff nach einem der vorhergehenden Patentansprüche, dadurch gekennzeichnet, dass der Alkohol aus Aethanol oder Methanol besteht.

5. Kraftstoff nach einem der vorhergehenden Patentansprüche, dadurch gekennzeichnet, dass darin mehr als 15 Volumenprozente Tallöl als Mischungsstabilisator enthalten sind.